# EUROPEAN PATENT APPLICATION

(11) **EP 4 675 789 A1**
(43) Date of publication of application: **07.01.2026**
(21) Application number: 25183437.0
(22) Date of filing: 17.06.2025
(51) Int. Cl.: H01M 50/204, H01M 50/503, H01M 50/507

(54) **BATTERY ASSEMBLY AND METHOD FOR ASSEMBLING THE SAME**

(30) Priority: 05.07.2024 KR 20240089036
(71) Applicant: SK On Co., Ltd., Seoul 03161 (KR)
(72) Inventor: YOON, Ji Sang, 34124 Daejeon (KR); LEE, Dae Hyeon, 34124 Daejeon (KR); KANG, Hyeong Kwan, 34124 Daejeon (KR); KIM, Do Youn, 34124 Daejeon (KR); KIM, Do Heon, 34124 Daejeon (KR); BAN, Ji Sub, 34124 Daejeon (KR); AN, Sun Mo, 34124 Daejeon (KR)
(74) Representative: Prüfer & Partner mbB Patentanwälte · Rechtsanwälte

(57) **Abstract**

The present disclosure relates to a battery assembly and a method for assembling the same including: a plurality of battery cells (110), each including a lead tab portion (111) protruding in a first direction, stacked in a second direction; a busbar (54) electrically connected to the plurality of battery cells; and a guide member (51) positioned between the busbar and the plurality of battery cells, and including a plurality of lead tab insertion holes into which each lead tab portion of the plurality of battery cells is inserted along the first direction.

## Description

### BACKGROUND OF THE INVENTION

### 1. Field

The present disclosure relates to a battery assembly and a method for assembling a battery assembly. More specifically, the present invention relates to a battery assembly with improved assembly efficiency and thermal stability, and a method for assembling a battery assembly.

### 2. Description of the Related Art

A typical battery assembly includes a plurality of battery cells and a busbar for electrically connecting the plurality of battery cells. The plurality of battery cells may include a lead tab portion having a positive electrode and a negative electrode. Each of the lead tab portions may be inserted into a plurality of slit holes of the busbar to be defective, so that the busbar may be electrically connected to the plurality of battery cells. However, since the thickness of the slit hole and the thickness of the lead tab portion are thin, it may be difficult to insert each lead tab portion into the plurality of slit holes at the same time.

In addition, when thermal runaway occurs, high-temperature gas and particles may be vented to the side facing the busbar among the side surfaces of the plurality of battery cells. Therefore, there is a need to block thermal propagation through the side facing the busbar.

### SUMMARY OF THE INVENTION

According to one aspect of the present disclosure, a battery assembly and a method assembling a battery assembly that are easy to assemble may be provided.

According to another aspect of the present disclosure, the thermal stability of the battery assembly may be improved.

According to another aspect of the present disclosure, when a battery cell experiences thermal runaway, high-temperature gas may be discharged in an intended direction.

According to another aspect of the present disclosure, even if the insulating cover of the battery assembly is removed, the same or higher insulating effect may be provided.

Meanwhile, the present disclosure may be widely applied in the field of green technology such as electric vehicles, battery charging stations, energy storage systems (ESS), and other battery-based photovoltaics and wind power. In addition, the battery module according to the present disclosure may be used for eco-friendly mobility, including electric vehicles and hybrid vehicles, to prevent climate change by restraining air pollution and greenhouse gas emissions.

In an embodiment, a battery assembly may comprise: a plurality of battery cells, each including a lead tab portion protruding in a first direction, stacked in a second direction; a busbar electrically connected to the plurality of battery cells; and a guide member positioned between the busbar and the plurality of battery cells and including a plurality of lead tab insertion holes into which each lead tab portion of the plurality of battery cells is inserted along the first direction.

In an embodiment, the length of any one of the lead tab insertion holes along the second direction may be longer than the length of each lead tab portion.

In an embodiment, the battery assembly may further comprise: a busbar frame positioned between the busbar and the guide member to support the busbar, and a plurality of through holes penetrating the busbar frame along the first direction and into which each lead tab portion is inserted, wherein the length of any one of the plurality of through holes along the second direction is smaller than the length of any one of the plurality of lead tab insertion holes.

In an embodiment, the length of any one of the through holes along the second direction may be smaller than the length of any one of the lead tab insertion holes, and is longer than the length of each of the lead tab portions.

In an embodiment, the plurality of lead tab insertion holes and the plurality of through holes may be extended along a third direction perpendicular to the first direction and the second direction.

In an embodiment, the guide member may comprise a body portion including a plurality of lead tab insertion holes and a support portion extending from the body portion toward the busbar.

In an embodiment, each of the plurality of lead tab insertion holes may be extended along a third direction perpendicular to the first direction and the second direction.

In an embodiment, the guide member comprises a guide recessed portion in which a part of the body portion may be recessed toward the plurality of battery cells to form an insertion space.

In an embodiment, the battery assembly may further comprise: a busbar frame positioned between the busbar and the guide member to support the busbar; a plurality of through holes penetrating the busbar frame along the first direction for inserting each of the lead tab portion; and an insertion portion accommodated in the insertion space, wherein the insertion portion is formed by protruding from the busbar frame toward the guide member between the plurality of through holes or by sinking a part of the busbar frame.

In an embodiment, the guide member includes a guide hole penetrating the support portion along a third direction perpendicular to the first direction and the second direction.

In an embodiment, the battery assembly may further comprise: a busbar frame positioned between the busbar and the guide member to support the busbar and contacts with the support portion, and a fastening portion connecting the busbar frame and the guide member through the guide hole.

In an embodiment, the battery assembly may further comprise: a housing case accommodating the plurality of battery cells, the busbar, and the guide member therein; and a first side panel facing the busbar on one side of the housing case.

In an embodiment, the battery assembly may further comprise: a heat insulating member disposed between the first side panel and the busbar.

In an embodiment, the first side panel may comprise a first surface of both surfaces of the first side panel facing the busbar and a coating region in which at least a portion of the first surface is coated with an electrically insulating material.

In an embodiment, a method of assembling a battery assembly, which includes a plurality of battery cells, each of which includes a lead tab portion protruding along a first direction and arranged along a second direction, may comprise: moving a guide member including a plurality of lead tab insertion holes toward the plurality of battery cells, and inserting each lead tab portion of the plurality of battery cells into each of the plurality of lead tab insertion holes; and moving a busbar frame including a plurality of through holes penetrating along the first direction and in contact with the guide member along a third direction perpendicular to the first direction and the second direction, and inserting each lead tab portion into each of the plurality of through holes.

In an embodiment, a method of assembling a battery assembly further may comprise: accommodating the plurality of battery cells, the guide member, and the busbar frame inside the housing case after inserting each lead tab portion into each of the plurality of through holes.

According to an embodiment of the present disclosure, a battery assembly and a method assembling a battery assembly that are easy to assemble may be provided.

According to another embodiment of the present disclosure, the thermal stability of the battery assembly may be improved.

According to another embodiment of the present disclosure, high-temperature gas may be discharged in an intended direction during thermal runaway of a battery cell.

According to another embodiment of the present disclosure, even if the insulating cover of the battery assembly is removed, the same or more insulating effects may be provided.

### BRIEF DESCRIPTION OF THE DRAWINGS

FIG. 1 illustrates an example of a battery assembly according to the present disclosure.
FIG. 2 illustrates an example of a battery assembly in which an housing case is separated according to the present disclosure.
FIG. 3 illustrates an example in which a guide member according to the present disclosure is coupled to a plurality of battery cells.
FIG. 4 illustrates an example in which a busbar frame according to the present disclosure is coupled to a plurality of battery cells.
FIG. 5 illustrates a portion of a busbar frame and a guide member according to the present disclosure separately.
FIG. 6 illustrates a guide member according to the present disclosure.
FIG. 7 is a front view of the guide member according to the present disclosure.
FIG. 8 is a perspective view of the guide member according to the present disclosure.
FIG. 9 is an exploded view of the heat insulating portion and the first side panel of the battery assembly according to the present disclosure.
FIG. 10 illustrates a first side of the battery assembly according to the present disclosure facing a plurality of battery cells among both sides of the first side panel.

### DETAILED DESCRIPTION

Hereinafter, referring to the accompanying drawings, embodiments of the present disclosure are described in detail so that those skilled in the art to which the present disclosure pertains may easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Throughout the specification, when it is mentioned that a part is "connected" to another part, it includes not only the case where they are "directly connected," but also the case where they are "electrically connected" with another element in between.

Throughout the specification, when it is mentioned that an element is "on" another element, this includes not only the case where the element is in contact with the other element, but also the case where there is another element between the two elements.

Throughout the specification, when it is mentioned that a part "includes" or "comprises" a component, this does not mean that it excludes other components, but rather that it may include other components, unless otherwise specifically stated. The terms such as "about" and "substantially", which indicate degrees, as used throughout the specification, are used in a meaning that is at or near a numerical value when manufacturing and material tolerances inherent in the meanings stated are given, and are used to prevent unscrupulous infringers from unfairly exploiting the disclosure, which states precise or absolute numbers to aid understanding of the present disclosure. The terms "step of doing ~" or "step of ~" as used throughout the specification do not mean "step for ~".

In the present disclosure, a battery system may refer to any one of a battery module, a battery pack, and an energy storage system (ESS) including at least one battery stack in which a plurality of battery cells are grouped.

Hereinafter, with reference to the accompanying drawings and the description below, preferred embodiments of the present disclosure are described in detail. However, the present disclosure is not limited to the embodiments described here, but may be embodied in other forms. Throughout the specification, the same reference numerals represent the same components.

In the following, a battery assembly according to an embodiment of the present disclosure will be described.

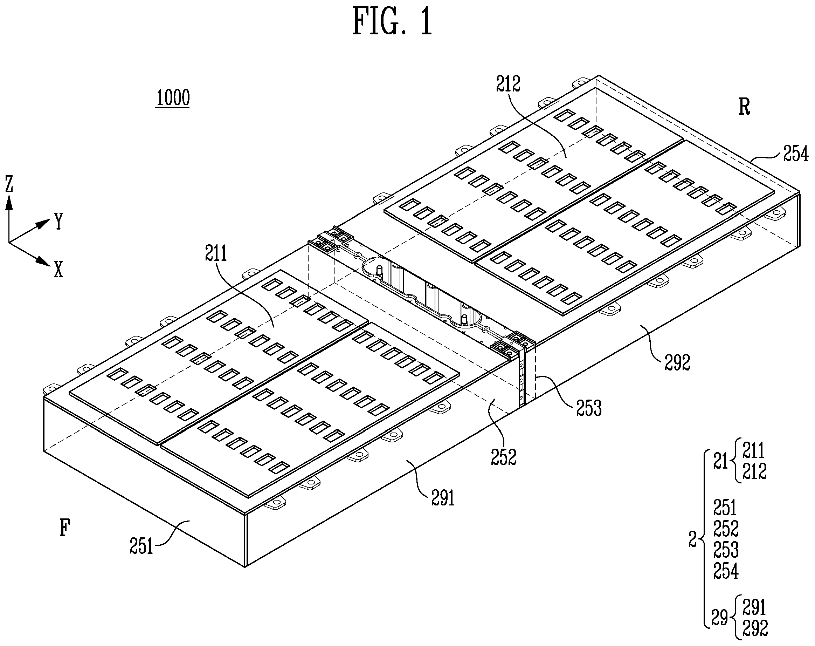

FIG. 1 illustrates an example of a battery assembly according to the present disclosure.

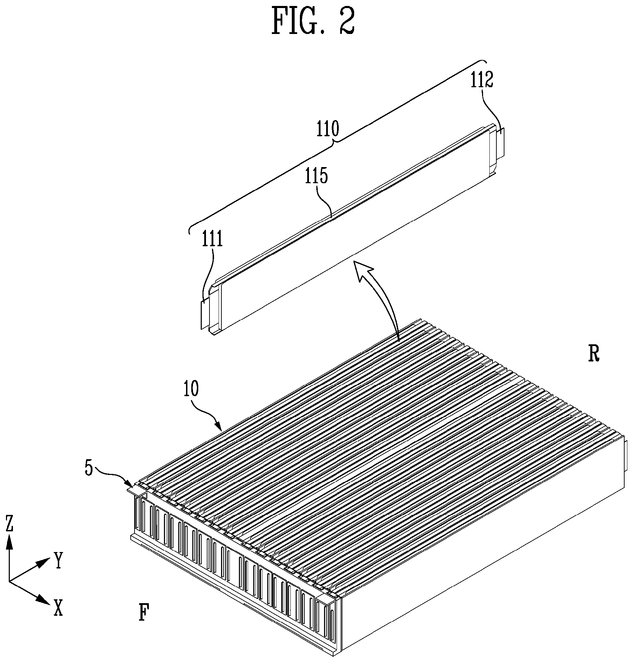

Referring to FIG. 1, a battery assembly 1000 according to the present disclosure may include a housing case 2 including a plurality of battery cells 110 (see FIG. 2) therein. The housing case 2 may include a housing body 29 that houses the plurality of battery cells 100 and a housing cover 21 that is coupled to the housing body 29 to form a accommodating space (not shown) for housing the plurality of battery cell 110 therein together with the housing body 29.

Referring to FIG. 1, the housing body 29 includes a first housing body 291 and a second housing body 292, and each of the first housing body 291, the second housing body 292 may accommodate a plurality of battery cells 100 therein. Similarly, the housing cover 21 may include a first housing cover 211 coupled to the first housing body 291 and a second housing cover 212 coupled to the second housing body 292.

The first housing body 291 and the second housing body 292 may be arranged in order along a first direction (Y direction, or a direction from front to rear), but the arrangement direction of the first housing body 291 and the second housing body 292 may vary depending on the design.

The first housing body 291 and the second housing body 292 may each include a accommodating bottom surface (not shown) forming a bottom surface, first side panels 251 and 253 and second side panels 252 and 254 extending from the accommodating bottom surface toward the housing cover 21, and first connection panels and second connection panels connecting the first side panels 151 and 253 and the second side panels 252 and 254, respectively.

The first side panel 251 and the second side panel 252 may be disposed along the first direction with respect to the first housing body 291. Similarly, the first side panel 253 and the second side panel 254 of the second housing body 292 may be disposed along the first direction (or the Y direction) with respect to the second housing body 292.

The battery assembly 1000 may further include a cooling portion (not shown) connected to a cooling flow path between the first housing body 291 and the second housing body 292. The cooling water may be externally supplied to the battery assembly 1000 through the cooling unit. The cooling water may be circulated through each accommodating floor surface connected to the cooling portion of the first housing body 291 and the second housing body 292.

Referring to FIG. 1, the first side panels 251 and 253 and the second side panels 252 and 254 may be located in front and rear of the first housing body 291 and the second housing body 292, respectively. In the present disclosure, the front and rear sides are for illustrative purposes only, and the positions of the first side panels 251 and 253 and the second side panels 252 and 254 are not limited to the front and rear side panels shown in FIG. 1.

Furthermore, the housing body 29 may also be provided with one housing body and one housing cover. Therefore, unless otherwise specified in the present disclosure, the above housing case 2 has been described on the premise of one housing body and one housing cover, and the description of the above one housing body and the above one housing cover may be equally applied to the first housing body 291 and the first housing cover 211, the second housing body 292, and the second housing cover 212, unless otherwise specified.

FIG. 2 illustrates an example of a battery assembly in which an housing case is separated according to the present disclosure.

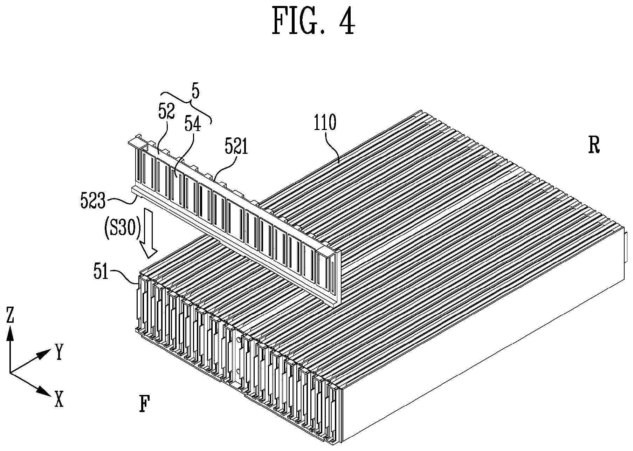

Referring to FIG. 2, a battery assembly 1000 according to the present disclosure may include a plurality of battery cells 100 each including lead tab portions 111, 112 protruding along a first direction (or Y direction) and stacked along a preset second direction, and a busbar 54 (see FIG. 4) electrically connected to the plurality of battery cells 10.

Meanwhile, the busbar 54 may be supported by a busbar frame 52 (see FIG. 4). The busbar 54 and the busbar frame 52 may extend along the second direction. The busbar 54 and the busbar frame 52 may be collectively referred to as a busbar assembly 5.

In addition, the busbar assembly 5 and the plurality of battery cells 100 may be collectively referred to as a cell stacking assembly 10.

Accordingly, the battery assembly 1000 according to the present disclosure may include a plurality of battery cells 100 stacked along the second direction, and a busbar assembly 5 electrically connected to the plurality of battery cells 10.

The plurality of battery cells 100 may each include a body portion 115 including an electrode assembly (not shown) for producing or storing electric energy therein, lead tab portions 111, 112 or terminal portions that are electrically connected to the electrode assembly and protrude to the outside.

Although the present disclosure describes the pouch-type battery cell 110 as an example, the battery cell 110 is not limited to the pouch-type. That is, the battery cell 110 according to the present disclosure may have a rectangular shape, a cylindrical shape, or another shape of battery cell.

The busbar assembly 5 may be arranged with the plurality of battery cells 100 interposed therebetween. That is, the lead tab portions 111, 112 of the plurality of battery cells 100 may be electrically connected to the busbar 54. For this purpose, the busbar assembly 5 may be in a form extending along the second direction.

The busbar 54 may further include a slit hole (not shown) penetrating the busbar 54 along a direction in which each of the lead tab portions 111, 112 protrudes or a first direction (Y direction). The lead tab portions 111, 112 may be inserted into the plurality of slit holes and then welded to be electrically connected to the busbar 54.

In the present disclosure, the connection relationship between each lead tab portion and the busbar 54 is described by using one busbar 54 coupled to each lead tab portion located in the same direction among the plurality of lead tab portions 111, 112, but the same applies to each lead tab portions located in the other direction among the plurality the lead tab portions 111, 112 and the other busbar.

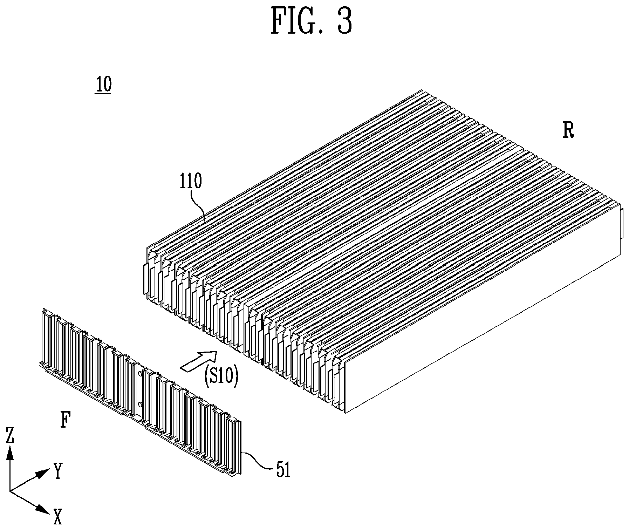

FIG. 3 illustrates an example in which a guide member according to the present disclosure is coupled to a plurality of battery cells.

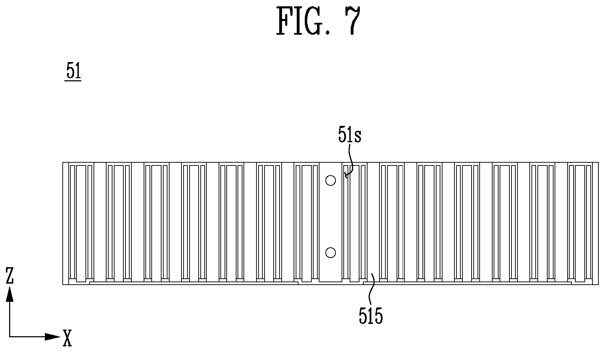

Referring to FIGS. 1 to 3, a plurality of battery cells 100 each including lead tab portions 111, 112 protruding along a first direction or Y direction and stacked along a second direction or X direction, a busbar 54 electrically connected to the battery cells 100 (see FIG. 4), and a guide member 51 located between the busbar 54 and the battery cells 100 and including a plurality of lead tab insertion holes 51s into which each lead tab portion 111, 112 of the battery cells 100 is inserted along the first direction (see FIG. 7).

The guide member 51 may be provided to facilitate assembly of each of the lead tab portions 111, 112 and the busbar 54. Each of the lead tab portions 111, 112 may be first inserted into and aligned with a plurality of lead tab insertion holes 51s passing through the guide member 51. Therefore, the connection between the bus bar assembly 5 and/or the bus bar 54 and each of the above lead tab parts 111, 112 may be made easier. That is, the battery assembly 1000 may be easier to assemble.

In other words, the battery assembly 1000 according to the present disclosure may include a plurality of battery cells 100, a busbar assembly 5 electrically connected to the plurality of battery cells 100, and a guide recess 511 recessed toward the plurality of battery cell 110 to accommodate at least a part of the busbar assembly 5, and a guide member 51 positioned between the plurality of battery cells 100 and the busbar assembly 5 to be in contact with the plurality of battery cell 110 and the busbar assembly 5.

The guide member 51 may be located between the busbar 54 and the body portion 115. Alternatively, the guide member 51 may be located between the busbar frame 52 and the body portion 115.

Alternatively, the guide member 51 may be located between the busbar 54 and the plurality of battery cells 100. That is, like the busbar 54, the guide member 51 may be arranged with the plurality of battery cells 100 interposed therebetween and may include a plurality of lead tab insertion holes 51s into which the respective lead tab portions 111, 112 protruding along the first direction are inserted with the plurality of battery cells 100 interposed therebetween.

Referring to FIG. 3, the guide member 51 may approach the plurality of battery cells 100 along the first direction. Each of the lead tab portions 111, 112 may be inserted into each of the plurality of lead tab insertion holes 51s to guide alignment of the plurality of battery cells 100 along the X direction and the Y direction.

FIG. 4 illustrates an example in which a busbar frame according to the present disclosure is coupled to a plurality of battery cells.

Referring to FIG. 4, the busbar assembly 5 or the busbar frame 52 may be connected to the respective lead tab portions 111, 112 after approaching the guide member 51 in a third direction (Z direction).

If the busbar 54 is pre-engaged with the busbar frame 52, the busbar assembly 5 may be connected to the respective lead tab portions 111, 112, and after the busbar frames 52 are engaged, if the busbars 54 are connected, the respective lead tab portion 111, 112 may be first inserted into the busbar frame 51.

For this purpose, the guide member 51 may serve to align the respective lead tab portions 111, 112 and to guide the busbar frame 52 or the busbar assembly 5 to electrically connect the respective lead tab portion 111, 112 to the busbar 54 through a plurality of through holes (not shown) passing through the busbar frames 52.

Once the busbar frame 52 or the busbar assembly 5 approaches along the third direction and a part thereof is inserted into the guide member 51, the busbar frames 52 or the busbar assembly 5 naturally engage with the guide member 51 along the first direction and the third direction, and at the same time, the respective lead tab portions 111, 112 may be inserted into the busbar frame 62 or the busbar assemblies 5.

To this end, the busbar assembly 5 or the busbar frame 52 may comprise a plurality of through-holes (not shown) passing through the busbar frames 52.

In addition, the number of the plurality of battery cells 100, the number of lead tab insertion holes 51s, and the number of the through holes may be the same.

Meanwhile, referring to FIG. 3 and FIG. 4, the method for assembling a battery assembly according to the present disclosure may include a step S10 of moving a guide member 51 including a plurality of lead tab insertion holes 51s toward the plurality of battery cells 100, so that lead tab portions 111, 112 of the plurality of battery cell 110 are inserted into each of the plurality of lead tab insert holes 51s, and a step S30 of moving a busbar frame 52 including a plurality of through holes penetrating along the first direction and in contact with the guide member 51 along a third direction perpendicular to the first direction and the second direction, so that the lead tab portions 111, 112 are inserted into the plurality of through holes.

The busbar frame 52 may be pre-engaged with the busbar 54 before the respective lead tab portions 111, 112 are inserted into the busbar frame 52 as described above.

Thus, the step S30 of inserting each of the lead tab portions 111, 112 into the busbar frame 52 may be replaced by the step of inserting each lead tab portion 111, 112 in the busbar assembly 5.

Referring to FIGS. 1 and 4, after the step of inserting each of the lead tab portions 111, 112 into each of the plurality of through holes, the step of accommodating the plurality of battery cells 100, the guide member 51, and the busbar frame 52 in the housing case 2 may be further included.

Referring to FIG. 4, the busbar frame 52 may include a lower surface 523 of the busbar frame that first approaches the guide member 51 along the third direction, and an upper surface 521 of the busbar frame in a direction opposite to the lower surface 523.

The upper surface 521 of the busbar frame may be a surface facing the housing cover 21, and the lower surface 523 of the busbar frame may be a surface faced toward the accommodating bottom surface (not shown).

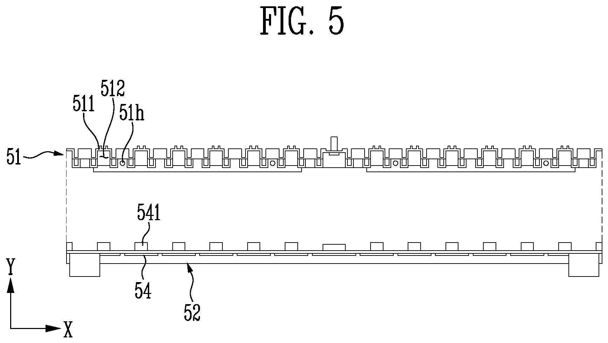

FIG. 5 illustrates a portion of a busbar frame and a guide member according to the present disclosure separately.

In FIG. 5, in order to explain the connection relationship between the busbar frame 52 and the guide member 51 described in FIG. 4, a part of the busbar frames 52 and the guide members 51 is separated and enlarged.

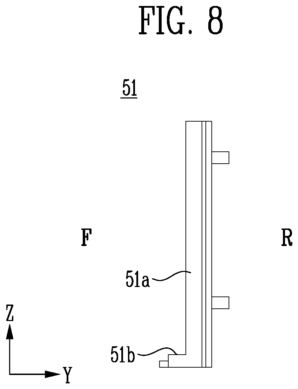

Referring to FIG. 5, the guide member 51 may further include a body portion 51a including the plurality of lead tab insertion holes, see FIG. 8, and a support portion 51b extending from the body portion 51a toward the busbar 54 or the busbar frame 52.

The guide member 51 may further include a guide recessed portion 511 in which a part of the body portion 51a is recessed toward the plurality of battery cells 100 to form an insertion space 512.

The guide recess 511 has a tunnel shape, and the busbar frame 52 may be inserted into the guide recess 511 along the third direction.

Meanwhile, the guide member 51 may further include a guide hole 51h penetrating the support portion 51b along the third direction. This is to connect the busbar frame 52 and the guide member 51 through the guide hole 51h.

Further, referring to FIGS. 4 and 5, the battery assembly 1000 according to the present disclosure may further include a busbar frame 52 positioned between the busbar 54 and the guide member 51 to support the busbar 54, a plurality of through holes (not shown) penetrating the busbar frame 52 along the first direction to insert the lead tab portions 111, 112, and an insertion portion 541 protruding from the busbar frame 51 toward the guide member 51 between the plurality of through holes or partially recessed in the busbar frame 512 to be accommodated in the insertion space 512.

That is, the shapes of the insertion portion 541 and the insertion space 512 may be mutually corresponding shapes or female-male shapes so that the insertion portion 542 may be accommodated in the insertion space 522.

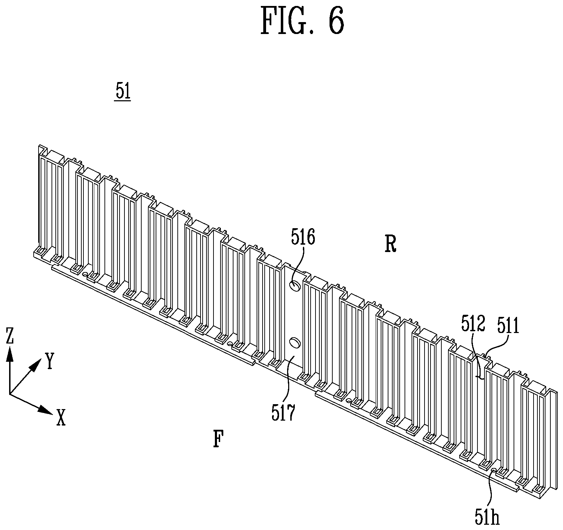

FIG. 6 illustrates a guide member according to the present disclosure.

Referring to FIG. 6, the guide member 51 may extend along the second direction. In addition, the guide member 51 may include a plurality of guide recesses 511 each having a plurality of insertion spaces 512.

Similarly, referring to FIG. 5, the busbar frame 52 may include a plurality of insertion portions 541. The number of insertion portions 541 and the number of guide recessed portions 511 may be the same.

The plurality of guide recesses 511 may have a tunnel shape opened in a direction toward the housing cover 21. As a result, the plurality of insertion portions 541 may be inserted into the guide member 51 along the third direction.

Meanwhile, the guide member 51 may further include a guide hole 51h penetrating the support portion 51b along the third direction.

The guide hole 51h may be provided for assembling with the busbar frame 52. In addition, when the busbar frame 52 is moved along the third direction, the position of the busbar frame 51 may be guided on the guide member 51 through the guide hole 51h.

In order to connect the guide member 51 to the busbar frame 52, the battery assembly 1000 according to the present disclosure may further include a fastening portion (not shown) that connects the busbar frame 51 to the guide member 51 through the guide hole 51h.

Meanwhile, the guide member 51 may further include a spacing member 516 for maintaining a spacing between the plurality of battery cells 110 or the plurality of body parts 115 and the guide member 51.

FIG. 7 is a front view of the guide member according to the present disclosure.

Specifically, FIG. 7 is a front view of a case-facing surface 515 of both surfaces of the guide member 51 facing the busbar 54.

Referring to FIG. 7, the guide member 51 may further include a lead tab insertion hole 51s into which the lead tab portions 111, 112 of the plurality of battery cells 100 are inserted.

The lead tab insertion hole 51s may extend along the third direction. The plurality of lead tab insertion holes 51s may be provided, and the respective lead tab portions 111, 112 located in the same direction may be inserted into each of the plurality of lead tab insert holes 51s.

Each of the lead tab portions 111, 112 may be inserted into each of the plurality of lead tab insertion holes 51s respectively and then inserted into the busbar frame 52.

That is, the guide member 51 may be located between the busbar frame 52 and the plurality of battery cells 100.

Meanwhile, the busbar frame 52 may further include a through hole into which the lead tab portions 111, 112 are inserted. The through hole may pass through the busbar frame 52 along the first direction.

Therefore, the respective lead tab portions 111, 112 may be electrically connected to the busbar 54 after being inserted into the lead tab insertion hole 51s and the through hole.

That is, the guide member 51 and the busbar 54 may be located opposite to each other with the busbar frame 52 interposed therebetween. In addition, at least a part of the plurality of battery cells and the busbar 54 or at least a part of the plurality of battery cells and the busbar assembly 5 may be located opposite to each other with the guide member 51 interposed therebetween.

Similar to the lead tab insertion hole 51s, a plurality of through holes may be provided. In addition, the plurality of through holes and the plurality of lead tab insertion holes 51s are provided in the same number and are positioned to overlap each other, so that the lead tab portions 111, 112 may be inserted into any one of corresponding through holes and any one of corresponding lead tab insertion holes 51s.

Similar to the lead tab insertion hole 51s, the through hole may extend along the third direction. The same applies to a slit hole (not shown) penetrating the busbar 54.

Meanwhile, the thickness of each of the lead tab portions along the second direction may be shorter than the lengths of the plurality of lead tab insertion holes 51s and the lengths of the plurality of through holes along the second direction.

This is to insert the respective lead tab portions 111, 112 into each of the plurality of lead tab insertion holes 51s and the plurality of through holes. However, if the respective lead tab portions 111, 112 are inserted into each of the plurality of through holes without the guide member 51, the difficulty of assembling the respective lead tab portion 111, 112 and the plurality of through hole may be increased. This is because even if the length of the plurality of through holes along the second direction is larger than the thickness of each of the lead tab portions 111, 112, it is still small. Therefore, it may be difficult to align the plurality of battery cells 100 through the plurality of through holes.

To this end, the battery assembly 1000 according to the present disclosure may include a guide member 51 that guides coupling between the plurality of battery cells 100 and the busbar frame 52 (or the busbar assembly 5).

To this end, the length of any one of the plurality of lead tab insertion holes 51s along the second direction may be longer than the length of each of the lead tab portions 111, 112.

In addition, the length of any one of the plurality of through holes along the second direction may be smaller than the length of any of the plurality of lead tab insertion holes 51s.

In addition, the length of any one of the through holes along the second direction may be smaller than the length of any of the lead tab insertion holes 51s and may be longer than the length of each of the lead tab portions 111, 112.

Since the respective lead tab portions 111, 112 are primarily aligned through the lead tab insertion hole 51s, the respective lead tab portion 111, 112 may be assembled while being inserted into each of the plurality of through holes at substantially the same time.

Meanwhile, referring to FIGS. 6 and 7, the guide member 51 may include a guide recess 511 in at least a part between the plurality of lead tab insertion holes 51s.

The length of the guide recess 511 in the second direction may be longer than the length of each of the lead tab insertion holes 51s.

Further, referring to FIGS. 5 and 7, the length of the insertion portion 541 may be smaller than or equal to the length of the guide recess 511 along the second direction. Therefore, when the insertion portion 541 starts to be inserted into the guide recess 511 along the third direction, the insertion portion 541 is accommodated naturally in the guide recess 511 along the third direction and moves along the first direction, so that the lead tab portions 111, 112 may be inserted into the through hole.

FIG. 8 is a perspective view of the guide member according to the present disclosure.

The guide member 51 may further include a body portion 51a including the plurality of lead tab insertion holes (see FIG. 8), and a support portion 51b extending from the body portion 51a toward the busbar 54 or the busbar frame 52.

The body part 51a and the support part 51b may be integrally formed in an L-shape. The support portion 51b may include the guide hole 51h.

The shape of the support portion 51b may prevent the battery cell 110 from being pushed by the pressure of the gas discharged in direction of each of lead tab portions 111, 112 when the battery cell 110 is subjected to thermally runaway condition.

Meanwhile, the guide member 51 may further include a spacing member 516 for maintaining a space between the plurality of battery cells 110 (or the body portion 115) and the guide member 51. The spacing member 516 may protrude toward the battery cell 110 (or the body portion 115) from a cell-facing surface 517 of one surface of the guide member 51, which is provided toward the battery cells 100.

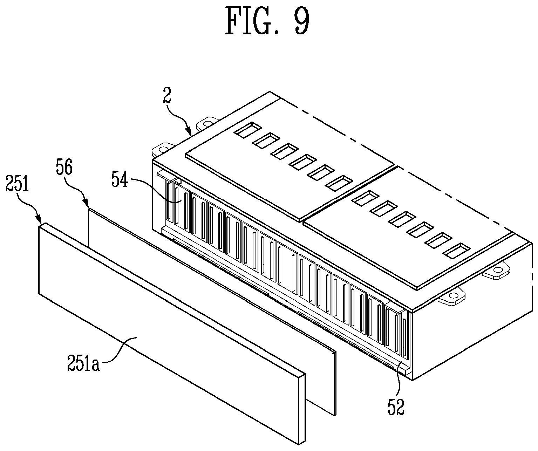

FIG. 9 is an exploded view of the heat insulating portion and the first side panel of the battery assembly according to the present disclosure.

The battery assembly 1000 according to the present disclosure may include a housing case 2 accommodating the plurality of battery cells 100, the busbar 54, and the guide member 51 (see FIG. 6) therein, and a first side panel 251 facing the busbar 54 on one surface of the housing case 2.

That is, the first side panel 251 may be one of the surfaces of the housing case 2, which is located in a direction toward the lead tab portions 111, 112.

Referring to FIG. 9, the battery assembly 1000 according to the present disclosure may further include a heat insulating member 56 disposed between the first side panel 251 and the busbar 54 (or the busbar assembly 5).

Similarly, the heat insulating member 56 may also be disposed between the second side panel 252 and the busbar 54 (or the busbar assembly 5).

The heat insulating member 56 may be attached to the outer surface of the busbar assembly 5. Therefore, the heat insulating portion 56 may prevent at least a part of the busbar 54 from being exposed to the outside when the first side panel 251 is removed.

In addition, the heat insulating portion 56 may block a gas, off-gas or venting gas vented toward the first side panel 251 or the second side panel 252. Therefore, the heat insulating member 56 may delay the thermal propagation of at least one battery cell 110 to another adjacent battery cell 110 when the battery cell 110 is subjected to thermally runaway condition.

For example, the heat insulating member 56 may include an anti-flame fiber.

In addition, the heat insulating member 56 may be made of a flame-retardant material as well as an electrically insulating material.

In addition, the heat insulating member 56 may be inserted between the housing cover 21 and the plurality of battery cells 100.

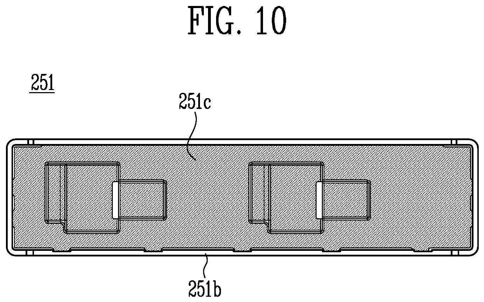

FIG. 10 illustrates a first side of the battery assembly according to the present disclosure facing a plurality of battery cells among both sides of the first side panel.

Referring to FIG. 10, the first side panel 251 may include a first surface 251b facing the busbar 54 among both surfaces of the first side panels 251, and a coating region 251c in which at least a part of the first surface 251c is coated with an electrically insulating material.

The first side panel 251 may be in the form of a generally rectangular. Accordingly, the first side panel 251 may include an inwardly facing first surface 251b and an outwardly facing second surface 251a (see FIG. 9).

Since the first surface 251b may come into contact with the busbar 54 to cause a short circuit, at least a part of the first surface 251b may be coated with an insulating material to prevent this. The region coated with the insulating material may be referred to as a coating region 251c. The coating on the coating region 251c may replace the electrically insulating pad provided between the first side panel 251 and the busbar assembly 5.

Some of the aspects of the present disclosure are as follows:
Aspect 1: A battery assembly comprising a plurality of battery cells, each including a lead tab portion protruding in a first direction, stacked in a second direction; a busbar electrically connected to the plurality of battery cells; and a guide member positioned between the busbar and the plurality of battery cells, and including a plurality of lead tab insertion holes into which each lead tab portion of the plurality of battery cells is inserted along the first direction.
Aspect 2: The battery assembly according to aspect 1, wherein the length of any one of the lead tab insertion holes along the second direction is longer than the length of each lead tab portion.
Aspect 3: The battery assembly according to aspect 1 or 2, further comprising: a busbar frame positioned between the busbar and the guide member to support the busbar, and a plurality of through holes penetrating the busbar frame along the first direction and into which each lead tab portion is inserted, wherein the length of any one of the plurality of through holes along the second direction is smaller than the length of any one of the plurality of lead tab insertion holes.
Aspect 4: The battery assembly according to aspect 3, wherein the length of any one of the through holes along the second direction is smaller than the length of any one of the lead tab insertion holes, and is longer than the length of each of the lead tab portions.
Aspect 5: The battery assembly according to aspect 3, wherein the plurality of lead tab insertion holes and the plurality of through holes are extended along a third direction perpendicular to the first direction and the second direction.
Aspect 6: The battery assembly according to preceding aspects, wherein the guide member comprises a body portion including a plurality of lead tab insertion holes and a support portion extending from the body portion toward the busbar.
Aspect 7: The battery assembly according to aspect 6, wherein each of the plurality of lead tab insertion holes is extended along a third direction perpendicular to the first direction and the second direction.
Aspect 8: The battery assembly according to aspect 6 or 7, wherein the guide member comprises a guide recessed portion in which a part of the body portion is recessed toward the plurality of battery cells to form an insertion space.
Aspect 9: The battery assembly according to aspect 8, further comprising: a busbar frame positioned between the busbar and the guide member to support the busbar; a plurality of through holes penetrating the busbar frame along the first direction for inserting each lead tab portion; and an insertion portion accommodated in the insertion space, wherein the insertion portion is formed by protruding from the busbar frame toward the guide member between the plurality of through holes or by sinking a part of the busbar frame.
Aspect 10: The battery assembly according to aspect 6, wherein the guide member includes a guide hole penetrating the support portion along a third direction perpendicular to the first direction and the second direction.
Aspect 11: The battery assembly according to aspect 10, further comprising: a busbar frame positioned between the busbar and the guide member to support the busbar and contacts with the support portion, and a fastening portion connecting the busbar frame and the guide member through the guide hole.
Aspect 12: The battery assembly according to preceding aspects, further comprising: a housing case accommodating the plurality of battery cells, the busbar, and the guide member therein; and a first side panel facing the busbar on one side of the housing case.
Aspect 13: The battery assembly according to aspect 12, further comprising: a heat insulating member disposed between the first side panel and the busbar.
Aspect 14: The battery assembly according to aspect 12 or 13, wherein the first side panel comprises a first surface of both surfaces of the first side panel facing the busbar and a coating region in which at least a portion of the first surface is coated with an electrically insulating material.
Aspect 15: Method of assembling a battery assembly, which includes a plurality of battery cells, each of which includes a lead tab portion protruding along a first direction and arranged along a second direction, comprising: moving a guide member including a plurality of lead tab insertion holes toward the plurality of battery cells, and inserting each lead tab portion of the plurality of battery cells into each of the plurality of lead tab insertion holes; and moving a busbar frame including a plurality of through holes penetrating along the first direction and in contact with the guide member along a third direction perpendicular to the first direction and the second direction, and inserting each lead tab portion into each of the plurality of through holes.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A battery assembly comprising
a plurality of battery cells, each including a lead tab portion protruding in a first direction, stacked in a second direction;
a busbar electrically connected to the plurality of battery cells; and
a guide member positioned between the busbar and the plurality of battery cells, and including a plurality of lead tab insertion holes into which each lead tab portion of the plurality of battery cells is inserted along the first direction.

2. The battery assembly according to claim 1, wherein the length of any one of the lead tab insertion holes along the second direction is longer than the length of each lead tab portion.

3. The battery assembly according to claim 1 or 2, further comprising:
a busbar frame positioned between the busbar and the guide member to support the busbar, and
a plurality of through holes penetrating the busbar frame along the first direction and into which each lead tab portion is inserted,
wherein the length of any one of the plurality of through holes along the second direction is smaller than the length of any one of the plurality of lead tab insertion holes.

4. The battery assembly according to claim 3, wherein the length of any one of the through holes along the second direction is smaller than the length of any one of the lead tab insertion holes, and is longer than the length of each of the lead tab portions.

5. The battery assembly according to claim 3, wherein the plurality of lead tab insertion holes and the plurality of through holes are extended along a third direction perpendicular to the first direction and the second direction.

6. The battery assembly according to preceding claims, wherein the guide member comprises a body portion including a plurality of lead tab insertion holes and a support portion extending from the body portion toward the busbar.

7. The battery assembly according to claim 6, wherein each of the plurality of lead tab insertion holes is extended along a third direction perpendicular to the first direction and the second direction.

8. The battery assembly according to claim 6 or 7, wherein the guide member comprises a guide recessed portion in which a part of the body portion is recessed toward the plurality of battery cells to form an insertion space.

9. The battery assembly according to claim 8, further comprising:
a busbar frame positioned between the busbar and the guide member to support the busbar;
a plurality of through holes penetrating the busbar frame along the first direction for inserting each lead tab portion; and
an insertion portion accommodated in the insertion space,
wherein the insertion portion is formed by protruding from the busbar frame toward the guide member between the plurality of through holes or by sinking a part of the busbar frame.

10. The battery assembly according to claim 6, wherein the guide member includes a guide hole penetrating the support portion along a third direction perpendicular to the first direction and the second direction.

11. The battery assembly according to claim 10, further comprising:
a busbar frame positioned between the busbar and the guide member to support the busbar and contacts with the support portion, and
a fastening portion connecting the busbar frame and the guide member through the guide hole.

12. The battery assembly according to preceding claims, further comprising:
a housing case accommodating the plurality of battery cells, the busbar, and the guide member therein; and
a first side panel facing the busbar on one side of the housing case.

13. The battery assembly according to claim 12, further comprising:
a heat insulating member disposed between the first side panel and the busbar.

14. The battery assembly according to claim 12 or 13, wherein the first side panel comprises a first surface of both surfaces of the first side panel facing the busbar and a coating region in which at least a portion of the first surface is coated with an electrically insulating material.

15. Method of assembling a battery assembly, which includes a plurality of battery cells, each of which includes a lead tab portion protruding along a first direction and arranged along a second direction, comprising:
moving a guide member including a plurality of lead tab insertion holes toward the plurality of battery cells, and inserting each lead tab portion of the plurality of battery cells into each of the plurality of lead tab insertion holes; and
moving a busbar frame including a plurality of through holes penetrating along the first direction and in contact with the guide member along a third direction perpendicular to the first direction and the second direction, and inserting each lead tab portion into each of the plurality of through holes.
